# EUROPÄISCHE PATENTSCHRIFT

(11) **EP 1 189 961 B1**
(45) Veröffentlichungstag und Bekanntmachung des Hinweises auf die Patenterteilung: **04.02.2004**
(21) Anmeldenummer: 00954417.2
(22) Anmeldetag: 23.06.2000
(51) Int. Cl.: C08G 18/10, C08G 18/72, C09J 175/04, C08G 18/76

(54) **Verwendung von Polyurethanzusammensetzungen mit niedrigen Monomergehalt als Haftklebstoff**
Use of polyurethane compositions of low monomer content as pressure sensitive adhesive
Utilisation de une composition de polyurethane a faible teneur en momomere comme auto-adhesive

(30) Priorität: 02.07.1999 DE 19930657
(43) Veröffentlichungstag der Anmeldung: 27.03.2002
(73) Patentinhaber: Henkel Kommanditgesellschaft auf Aktien, 40589 Düsseldorf (DE)
(72) Erfinder: BOLTE, Gerd, D-40789 Monheim (DE); KRÜDENSCHEIDT, Markus, D-40764 Langenfeld (DE)
(86) Internationale Anmeldenummer: PCT/EP2000/005804
(87) Internationale Veröffentlichungsnummer: WO 2001/002458

(56) Entgegenhaltungen:
- EP-A- 0 150 444
- EP-A- 0 590 398
- WO-A-98/29466
- WO-A-99/24486

## Beschreibung

Die Erfindung betrifft die Verwendung einer Polyurethanzusammensetzung mit haftklebrigen Eigenschaften und niedrigem Monomergehalt als Haftklebstoff, sowie Verfahren zu deren Herstellung.

Lebensmittel kommen häufig in portionierter Form in den Handel, um dem Verbraucher eine einfache Handhabung der Lebensmittel zu ermöglichen und die Portionierung zu erleichtern. Beispiele für solche portionierten Lebensmittel sind Wurst, Käse sowie fertig zubereitete Salate, die in der Verpackung bereits in portionierter Form vorliegen. Der Verbraucher muß lediglich die Verpackung öffnen, die gewünschte Menge an Lebensmittel entnehmen und kann anschließend den verbleibenden Rest bis zum endgültigen Verzehr lagern. Problematisch ist, jedoch, daß das wiederverschließen einer solchen Verpackung häufig nicht möglich ist. Infolgedessen trockenen die in der Verpackung verbliebenen Lebensmittel bei ihrer Lagerung aus, werden unansehnlich und verlieren ihren typischen Geschmack.

Zwar existieren Verpackungsformen, bei denen der Deckel durch mechanisches Einrasten in eine umlaufende Wulst wieder verschließbar sind. Solche Verpackungen haben jedoch den Nachteil, daß sie in der Regel einen erhöhten Raumbedarf haben und dem Wunsch des Handels nach möglichst raumsparenden Verpackungen nicht Rechnung tragen können.

Weiterhin existieren Verpackungen, bei denen der Deckel mit der Unterlage durch einen Klebstoff verbunden ist. Solche Verpackungen weisen jedoch oft den Nachteil auf, daß der Klebstoff bereits nach einmaligen Öffnen ein Wiederverschließen der Verpackung aufgrund mangelnder haftklebriger Eigenschaften verhindert.

Weiterhin werden solche Klebstoffe häufig aus der Schmelze aufgetragen. Die Schmelztemperaturen bislang bekannter und gegebenenfalls für solche Verpackungen geeigneter Haftklebstoffe sind jedoch in der Regel so hoch, daß Verpackungsmaterialien mit einem niedrigen Schmelz- oder Erweichungspunkt nicht mit solchen Klebstoffen behandelt werden können. Daraus resultiert eine Einschränkung bei der Auswahl der Verpackungsmaterialien, die eine unerwünschte Beschränkung der Handlungsfreiheit der entsprechenden Hersteller und Verpackungsbetriebe bedeutet. Darüber hinaus besteht bei solchen Klebstoffen die Anforderung, daß sie keine schädlichen Stoffe in das verpackte Gut abgeben, das heißt, keine Kontamination des Gutes mit dem Klebstoff enthaltenen, schädlichen Verbindungen verursachen.

Polyurethan-Präpolymere mit Isocyanat-Endgruppen sind seit langem bekannt. Sie können mit geeigneten Härtern - meist polyfunktionellen Alkoholen - in einfacher Weise zu hochmolekularen Stoffen kettenverlängert oder vernetzt werden.

Um Polyurethan-Präpolymere mit endständigen Isocyanatgruppen zu erhalten, ist es üblich, polyfunktionelle Alkohole mit einem Überschuß an Polyisocyanaten, in der Regel wenigstens überwiegend Diisocyanate, zur Reaktion zu bringen. Hierbei läßt sich das Molekulargewicht wenigstens näherungsweise über das Verhältnis von OH-Gruppen zu Isocyanatgruppen steuern. Während ein Verhältnis von OH-Gruppen zu Isocyanatgruppen von 1 : 1 oder nahe 1 : 1 oft zu harten, gegebenenfalls spröden Molekülen mit hohen Molekulargewichten führt, wird beispielsweise bei einem Verhältnis von etwa 2 : 1 bei der Verwendung von Diisocyanaten im statistischen Mittel an jede OH-Gruppe ein Diisocyanatmolekül angehängt, so daß es im Verlauf der Reaktion im Idealfall nicht zu Oligomerbildung bzw. Kettenverlängerung kommt.

In der Praxis lassen sich solche Kettenverlängerungsreaktionen allerdings nicht unterbinden, was dazu führt, daß am Ende der Umsetzung, unabhängig von der Reaktionszeit, eine gewisse Menge der im Überschuß eingesetzten Komponente übrig bleibt. Wird als Überschußkomponente beispielsweise Diisocyanat eingesetzt, so verbleibt ein in der Regel nicht unerheblicher Anteil dieser Komponente aufgrund des dargestellten Sachverhalts im Reaktionsgemisch.

Besonders störend wirkt sich ein Gehalt an solchen Substanzen dann aus, wenn es sich um leicht flüchtige Diisocyanate handelt. Die Dämpfe dieser Diisocyanate sind häufig gesundheitsschädlich, und die Anwendung von Produkten mit einem hohen Gehalt an solchen leichtflüchtigen Diisocyanaten erfordert seitens des Anwenders aufwendige Maßnahmen zum Schutz der das Produkt verarbeitenden Personen, insbesondere aufwendige Maßnahmen zur Reinhaltung der Atemluft.

Da Schutz- und Reinigungsmaßnahmen in der Regel mit hohen finanziellen Investitionen oder Kosten verbunden sind, besteht seitens der Anwender ein Bedürfnis nach Produkten, die einen, in Abhängigkeit vom verwendeten Isocyanat, möglichst niedrigen Anteil an leichtflüchtigen Diisocyanaten aufweisen.

Unter "leichtflüchtig" werden im Rahmen des vorliegenden Textes solche Substanzen verstanden, die bei etwa 30°C einen Dampfdruck von mehr als etwa 0,0007 mmHg oder einen Siedepunkt von weniger als etwa 190°C (70 mPa) aufweisen.

Setzt man anstatt der leichtflüchtigen Diisocyanate schwerflüchtige Diisocyanate ein, insbesondere die weit verbreiteten bicyclischen Diisocyanate, beispielsweise Diphenylmethandiisocyanate, so erhält man in der Regel Polyurethanbindemittel mit einer Viskosität, die üblicherweise außerhalb des für einfache Verarbeitungsmethoden brauchbaren Bereichs liegt. In diesen Fällen kann die Viskosität der Polyurethan-Präpolymere durch Zugabe geeigneter Lösemittel abgesenkt werden, was aber der meist geforderten Lösemittelfreiheit widerspricht. Eine weitere Möglichkeit zur Absenkung der Viskosität unter Vermeidung von Lösemitteln besteht in der Zugabe eines Überschusses an monomeren Polyisocyanaten, die im Rahmen eines späteren Härtungsvorgangs (nach der Zugabe eines Härters oder durch Härten unter Feuchtigkeitseinfluß) mit in die Beschichtung oder Verklebung eingebaut werden (Reaktiwerdünner).

Während sich die Viskosität der Polyurethan-Präpolymeren auf diese Weise tatsächlich absenken läßt, führt die in der Regel unvollständige Umsetzung des Reaktiwerdünners häufig zu einem Gehalt der Verklebung bzw. der Beschichtung an freien, monomeren Polyisocyanaten, die beispielsweise innerhalb der Beschichtung oder Verklebung, oder zum Teil auch in die beschichteten oder verklebten Materialien hinein, "wandern" können. Solche Bestandteile einer Beschichtung oder Verklebung werden in Fachkreisen häufig als "Migrate" bezeichnet. Durch Kontakt mit Feuchtigkeit werden die Isocyanatgruppen der Migrate kontinuierlich zu Aminogruppen umgesetzt. Die üblicherweise dadurch entstehenden aromatischen Amine stehen im Verdacht, eine kanzerogene Wirkung zu haben. Besonders im Verpackungsbereich, speziell bei Lebensmittelverpackungen, sind solche Migrate daher unerwünscht.

Die DE-A 34 01 129 betrifft ein Verfahren zur Herstellung gemischter Polyurethan-Präpolymere, bei dem mehrfunktionelle Alkohole zunächst mit der schneller reagierenden Isocyanatgruppe eines asymmetrischen Diisocyanats unter Erhalt der langsamer reagierenden Gruppe umgesetzt werden, und die Umsetzungsprodukte dann mit einem symmetrischen Diisocyanat verbunden werden, dessen gleich reaktive Isocyanatgruppen wiederum schneller reagieren als die langsam reagierenden Gruppen der erstgenannten mehrfunktionellen Isocyanatverbindung. Die beschriebenen Polyurethanpräpolymeren weisen hohe Viskositäten und damit hohe Verarbeitungstemperaturen auf, die ihre Anwendung nur unter solchen Bedingungen zulassen, die hohe Verarbeitungstemperaturen erlauben.

Solche hochviskosen Polyurethanpräpolymeren lassen jedoch bei der Art des zu verklebenden Materials aufgrund ihrer hohen Verarbeitungstemperatur nur eine eingeschränkte Auswahl an zu Verklebenden Materialien zu. Bei mit Klebstoffen laminierten Verbundstoffen kommt es beim Auftrag eines Schmelzklebstoffs bei zu hoher Temperatur oft zu Delaminationserscheinungen oder Formänderungen im Auftragsbereich.

Es bestand demnach ein Bedürfnis nach lösemittelfreien Klebstoffen mit haftklebrigen Eigenschaften, die eine niedrigere Auftragstemperatur gewährleisten, schnell zu einem festen Klebeverbund führen, weitgehend frei von migrierfähigen Substanzen sind und auch nach mehrfachem Öffnen und wieder Zusammenfügen der Klebeverbindung ausreichende haftklebrige Eigenschaften aufweisen.

Es bestand weiterhin ein Bedürfnis nach Verpackungsformen, die eine möglichst raumsparende Verpackung des zu verpackenden Gutes zulassen, gleichzeitig die geforderte Wiederverschließbarkeit gewährleisten, keine Kontamination des zu verpackenden Gutes bewirken und darüber hinaus aus unterschiedlichsten Verpackungsmaterialien bestehen können.

Der Erfindung lag demnach die Aufgabe zugrunde, eine haftklebrige Polyurethanzusammensetzung zur Verfügung zu stellen, mit der die oben genannten Bedürfnisse befriedigt werden können.

Der Erfindung lag weiterhin die Aufgabe zugrunde, eine Verpackung zur Verfügung zu stellen, die ein einfaches Öffnen und Verschließen durch den Anwender ermöglicht.

Gelöst werden die obengenannten Aufgabe durch die Verwendung einer Polyurethanzusammensetzung, die durch Umsetzung eines NCO-Gruppen tragenden Polyurethanpräpolymeren mit einem entsprechenden OH-Gruppen tragenden Härter erhältlich ist, sowie durch mit Hilfe einer solchen Polyurethanzusammensetzung erhältliche Verpackungen.

Gegenstand der vorliegenden Erfindung ist daher die Verwendung einer Polyurethanzusammensetzung, erhältlich durch Umsetzung zweier Komponenten A und B, wobei
a) als Komponente A mindestens ein Polyurethan Präpolymeres A1 eingesetzt wird, das durch Umsetzung mindestens einer Polyolkomponente mit mindestens zwei mindestens difunktionellen unterschiedlichen Isocyanaten erhältlich ist und
b) als Komponente B ein mindestens difunktioneller Härter eingesetzt wird, der pro Molekül mindestens zwei gegenüber Isocyanatgruppen reaktionsfähige funktionelle Gruppe aufweist,
wobei das Verhältnis von Isocyanatgruppen zu gegenüber Isocyanatgruppen reaktionsfähigen funktionellen Gruppen größer als 0,75 und kleiner als 1,15 ist, als Haftklebstoff.

Unter "niedrigviskos" wird im Rahmen der vorliegenden Erfindung eine Viskosität (gemessen nach Brookfield) verstanden, die bei 70 °C weniger als 4.500 mPas, beispielsweise 3.500 mPas oder weniger, beträgt.

Unter "gegenüber Isocyanatgruppen reaktionsfähigen funktionellen Gruppen" werden im Rahmen des vorliegenden Textes funktionelle Gruppen verstanden, die mit Urethangruppen unter Ausbildung mindestens einer kovalenten Bindung reagieren können. Geeignete reaktionsfähige funktionelle Gruppen können im Sinne einer Reaktion mit Isocyanaten monofunktionell sein, beispielsweise OH-Gruppen oder Mercaptogruppen. Sie können jedoch auch gegenüber Isocyanaten difunktionell sein, beispielsweise Aminogruppen. Ein Molekül mit einer Aminogruppe weist demnach auch zwei daß gegenüber Isocyanatgruppen reaktionsfähige funktionelle Gruppen auf. Es ist in diesem Zusammenhang nicht notwendig, daß ein einziges Molekül zwei getrennte, gegenüber Isocyanatgruppen reaktionsfähige funktionelle Gruppen aufweist. Entscheidend ist, daß das Molekül mit zwei Isocyanatgruppen unter Ausbildung jeweils einer kovalenten Bindung eine Verbindung eingehen kann.

Als Komponente A wird ein mindestens zwei Isocyanatgruppen tragendes Polyurethan-Präpolymeres A1, oder ein Gemisch aus zwei oder mehr mindestens zwei Isocyanatgruppen tragenden Polyurethan-Präpolymeren eingesetzt, das vorzugsweise durch die Umsetzung einer Polyolkomponente mit einem mindestens difunktionellen Isocyanat erhältlich ist. Wenn zwei oder mehr Polyurethan-Präpolymere in Komponente A1 enthalten sind, so werden diese im Rahmen des vorliegenden Textes insgesamt als Komponente A1 bezeichnet.

Unter einem "Polyurethan-Präpolymeren" wird im Rahmen des vorliegenden Textes eine Verbindung verstanden, wie sie sich beispielsweise aus der Umsetzung einer Polyolkomponente mit einem mindestens zwei mindestes difunktionellen Isocyanaten ergibt. Der Begriff "Polyurethan-Präpolymeres" umfaßt damit sowohl Verbindungen mit relativ niedrigem Molekulargewicht, wie sie beispielsweise aus der Umsetzung eines Polyols mit einem Überschuß an Polyisocyanat entstehen, es werden jedoch auch oligomere oder polymere Verbindungen mit umfaßt. Ebenso vom Begriff "Polyurethan-Präpolymere" umschlossen sind Verbindungen, wie sie z.B. aus der Umsetzung eines 3- oder 4-wertigen Polyols mit einem molaren Überschuß an Diisocyanaten, bezogen auf das Polyol, gebildet werden. In diesem Fall trägt ein Molekül der resultierenden Verbindung mehrere Isocyanatgruppen.

Auf polymere Verbindungen bezogene Molekulargewichtsangaben beziehen sich, soweit nichts anderes angegeben ist, auf das Zahlenmittel des Molekulargewichts (Mₙ). Alle Molekulargewichtsangaben beziehen sich, soweit nichts anderes angegeben ist, auf Werte, wie sie durch Gelpermeationschromatographie (GPC) erhältlich sind.

In der Regel weisen die im Rahmen der vorliegenden Erfindung eingesetzten Polyurethan-Präpolymeren ein Molekulargewicht von etwa 500 bis etwa 15.000, oder etwa 500 bis etwa 10.000, beispielsweise etwa 5.000, insbesondere jedoch etwa 700 bis etwa 4.500 auf.

Das mindestens zwei Isocyanatgruppen tragende Polyurethan-Präpolymere, oder das Gemisch aus zwei oder mehr mindestens zwei Isocyanatgruppen tragenden Polyurethan-Präpolymeren, weist vorzugsweise mindestens zwei unterschiedlich gebundene Arten von Isocyanatgruppen auf, wovon mindestens eine Art eine geringere Reaktivität gegenüber mit Isocyanaten reaktiven Gruppen aufweist als die andere Art oder die anderen Arten der Isocyanatgruppen. Isocyanatgruppen mit einer vergleichsweise geringeren Reaktivität gegenüber mit Isocyanaten reaktiven Gruppen (im Vergleich zu mindestens einer anderen im Polyurethanbindemittel vorliegenden Isocyanatgruppe) werden im folgenden Text auch als "weniger reaktive Isocyanatgruppen" bezeichnet, die entsprechende Isocyanatgruppe mit einer höheren Reaktivität gegenüber mit Isocyanatgruppen reaktiven Verbindungen wird auch als "reaktivere Isocyanatgruppe" bezeichnet.

Im Rahmen der vorliegenden Erfindung ist demnach beispielsweise ein difunktionelles Polyurethan-Präpolymeres als Komponente A einsetzbar, das zwei unterschiedlich gebundene Isocyanatgruppen aufweist, wobei eine der Isocyanatgruppen eine höhere Reaktivität gegenüber mit Isocyanaten reaktiven Gruppen aufweist als die andere Isocyanatgruppe. Ein solches Polyurethan-Präpolymeres ist beispielsweise aus der Umsetzung eines mindestens difunktionellen Alkohols mit zwei unterschiedlichen, beispielsweise difunktionellen, Isocyanatgruppen tragenden Verbindungen erhältlich. Das Verhältnis von OH Gruppen zu Isocyanat Gruppen beträgt bei dieser Umsetzung mindestens etwa 0,55 beispielsweise etwa 0,55 bis etwa 4. in einer bevorzugten Ausführungsform der Erfindung wird die Umsetzung so durchgeführt, daß im Mittel jedes Molekül des difunktionellen Alkohols mit jeweils einem Molekül der unterschiedlichen Isocyanatgruppen tragenden Verbindungen reagiert.

Es ist ebenso möglich ein tri- oder höherfunktionelles Polyurethan-Präpolymeres als Komponente A einzusetzen, wobei ein Molekül des Polyurethan-Präpolymeren beispielsweise eine unterschiedliche Anzahl an weniger reaktiven und reaktiveren Isocyanatgruppen aufweisen kann.

Weiterhin im Rahmen der Erfindung als Komponente A einsetzbar sind Gemische von zwei oder mehr Polyurethan-Präpolymeren. Bei den genannten Gemischen kann es sich um Polyurethan-Präpolymere handeln, bei denen einzelne Moleküle jeweils identisch gebundene Isocyanatgruppen tragen, wobei insgesamt im Gemisch mindestens eine reaktivere und eine weniger reaktive Isocyanatgruppe vorliegen müssen. Es ist ebenso möglich, daß das Gemisch neben Molekülen, die eine oder mehrere identisch gebundene Isocyanatgruppen tragen, weitere Moleküle enthält, die sowohl eine oder mehrere identisch gebundene Isocyanatgruppen als auch eine oder mehrere verschieden gebundene Isocyanatgruppen tragen.

Die zur erfindungsgemäßen Verwendung einsetzbare Komponente A enthält in einer bevorzugten Ausführungsform zusätzlich zu Polyurethan-Präpolymeren als Komponente A2 noch ein mindestens difunktionelles Isocyanat, dessen Molekulargewicht geringer ist, als das Molekulargewicht der in Komponente A enthaltenen Polyurethan-Präpolymeren A1, dessen Isocyanatgruppen eine höhere Reaktivität gegenüber mit Isocyanaten reaktiven Verbindungen aufweisen als die in Komponente A1 enthaltene, weniger reaktive Art von Isocyanatgruppen.

In der Regel weist Komponente A2 ein Molekulargewicht von bis zu etwa 1000 auf, wobei Molekulargewichte von bis zu etwa 720 oder weniger, beispielsweise etwa 550, 500, 450, 400, oder darunter, bevorzugt sind. Als Komponente A1 eignen sich beispielsweise niedermolekulare Diisocyanate mit einem Molekulargewicht von bis zu etwa 300 oder die Umsetzungsprodukte di- oder höherfunktioneller Alkohole mit einer mindestens äquimolaren Menge an solchen niedermolekularen Diisocyanaten, bezogen auf die OH-Gruppen des di- oder höherfunktionellen Alkohols. Weiterhin als Komponente A1 geeignet, sind beispielsweise die Trimerisierungsprodukte difunktioneller Isocyanate, die Isocyanurate.

Das erfindungsgemäß zu verwendende Polyurethanbindemittel enthält höchstens etwa 5 Gew.-% der Komponente A2, bezogen auf die gesamte Komponente A.

Die zur erfindungsgemäßen Verwendung einsetzbare Komponente A weist vorzugsweise einen Gehalt an leichtflüchtigen, Isocyanatgruppen tragenden Monomeren, von weniger als 2 Gew.-% oder weniger als 1 Gew.-% oder bevorzugt weniger als 0,5 Gew.-% auf. Diese Grenzen gelten insbesondere für leichtflüchtige Isocyanatverbindungen, die nur ein beschränktes Gefährdungspotential für mit ihrer Verarbeitung beschäftigte

Personen aufweisen, beispielsweise für Isophorondiisocyanat (IPDI), Hexamethylendiisocyanat (HDI), Tetramethylxylylendiisocyanat (TMXDI) oder Cyclohexandiisocyanat. Bei bestimmten leichtflüchtigen Isocyanatverbindungen, insbesondere solchen, die ein hohes Gefährdungspotential für mit ihrer Verarbeitung beschäftigte Personen aufweisen, beträgt deren Gehalt im erfindungsgemäßen Polyurethanbindemittel bevorzugt weniger als 0,3 Gew.-% und besonders bevorzugt weniger als 0,1 Gew.-%. Zu den letztgenannten Isocyanatverbindungen gehört insbesondere Toluylendiisocyanat (TDI). In einer weiteren, bevorzugten Ausführungsform der Erfindung weist das Polyurethanbindemittel einen Gehalt an TDI und HDI von weniger als 0,05 Gew.-% auf.

In einer weiteren bevorzugten Ausführungsform der Erfindung kann das erfindungsgemäß zu verwendende Polyurethanbindemittel zusätzlich zu den Komponenten A1 und A2 als Komponente A3 ein mindestens trifunktionelles Isocyanat enthalten.

Als mindestens trifunktionelle Isocyanate geeignet sind beispielsweise die Tri- und Oligomerisierungsprodukte der bereits oben erwähnten Polyisocyanate, wie sie unter Bildung von Isocyanuratringen durch geeignete Umsetzung von Polyisocyanaten, vorzugsweise von Diisocyanaten, erhältlich sind. Werden Oligomerisierungsprodukte eingesetzt, so eignen sich insbesondere diejenigen Oligomerisierungsprodukte mit einem Oligomerisierungsgrad von durchschnittlich etwa 3 bis etwa 5.

Zur Herstellung von Trimeren geeignete Isocyanate sind die bereits oben genannten Diisocyanate, wobei die Trimerisierungsprodukte der Isocyanate HDI, MDI oder IPDI besonders bevorzugt sind.

Ebenfalls zum Einsatz als Komponente A2 geeignet sind die polymeren Isocyanate, wie sie beispielsweise als Rückstand im Destillationssumpf bei der Destillation von Diisocyanaten anfallen. Besonders geeignet ist hierbei das polymere MDI, wie es bei der Destillation von MDI aus dem Destillationsrückstand erhältlich ist.

Im Rahmen einer bevorzugten Ausführungsform der Erfindung wird beispielsweise Desmodur N 3300, Desmodur N 100, das IPDI-trimere Isocyanurat T 1890 (Hersteller: Bayer AG) oder Triphenylmethantriisocyanat eingesetzt werden.

Die Komponente A3 wird als Bestandteil der Komponente A vorzugsweise in einer Menge von höchstens etwa 1 bis etwa 10 Gew.-%, beispielsweise etwa 2 bis etwa 7 oder etwa 3 bis etwa 5 Gew.-%, eingesetzt.

In einer bevorzugten Ausführungsform der Erfindung wird Komponente A durch eine mindestens zweistufige Reaktion hergestellt, bei der
(c) in einer ersten Stufe aus einem mindestens difunktionellen Isocyanat und mindestens einer ersten Polyolkomponente ein Polyurethan-Präpolymeres hergestellt wird, wobei das NCO/OH-Verhältnis kleiner als 2 ist und im Polyurethan-Präpolymeren noch freie OH-Gruppen vorliegen,
und
(d) in einer zweiten Stufe ein weiteres mindestens difunktionelles Isocyanat mit dem Polyurethan-Präpolymeren aus der ersten Stufe umgesetzt wird,
wobei die Isocyanatgruppen des in der zweiten Stufe zugesetzten Isocyanats eine höhere Reaktivität gegenüber mit Isocyanaten reaktiven Verbindungen aufweisen, als mindestens der überwiegende Anteil der im Polyurethan-Präpolymeren aus der ersten Stufe vorliegenden Isocyanatgruppen.

In einer weiteren bevorzugten Ausführungsform wird das weitere, mindestens difunktionelle Isocyanat im Überschuß, bezogen auf freie OH-Gruppen der Komponente A, zugegeben, wobei der nicht mit OH-Gruppen reagierende Anteil des weiteren mindestens difunktionellen Isocyanats Komponente A2 darstellt.

In einer weiteren bevorzugten Ausführungsform wird Komponente A durch eine mindestens zweistufige Reaktion hergestellt , wobei
(e) in einer ersten Stufe aus einem mindestens difunktionellen Isocyanat und mindestens einer ersten Polyolkomponente ein Polyurethan-Präpolymeres hergestellt wird, wobei das NCO/OH-Verhältnis kleiner als 2 ist und im Polyurethan-Präpolymeren noch freie OH-Gruppen vorliegen,
und
(f) in einer zweiten Stufe ein weiteres mindestens difunktionelles Isocyanat und eine weitere Polyolkomponente mit dem Polyurethan-Präpolymeren aus der ersten Stufe umgesetzt wird
wobei die Isocyanatgruppen des in der zweiten Stufe zugesetzten Isocyanats eine höhere Reaktivität gegenüber mit Isocyanaten reaktiven Verbindungen aufweisen, als mindestens der überwiegende Anteil der im Polyurethan-Präpolymeren aus der ersten Stufe vorliegenden Isocyanatgruppen.

In einer weiteren bevorzugten Ausführungsform wird das weitere mindestens difunktionelle Isocyanat im Überschuß, bezogen auf freie OH-Gruppen in der Komponente A und der weiteren Polyolkomponente, zugegeben, wobei der nicht mit OH-Gruppen reagierende Anteil des weiteren mindestens difunktionellen Isocyanats Komponente A2 darstellt.

Es ist im Rahmen der vorliegenden Erfindung bevorzugt, wenn bei der Herstellung der Komponente A in der zweiten Stufe das Verhältnis OH : NCO etwa 1 bis etwa 15, beispielsweise etwa 1,5 bis etwa 12 beträgt.

In einer bevorzugten Ausführungsform der vorliegenden Erfindung beträgt das Verhältnis OH : NCO in der zweiten Stufe etwa 1 bis etwa 2.

In einer weiteren bevorzugten Ausführungsform der Erfindung beträgt in der ersten Stufe das Verhältnis OH : NCO etwa 0,55 bis etwa 4, insbesondere etwa 0,6 bis etwa 3, wobei gegebenenfalls die beschriebenen Verhältnisse für die zweite Stufe ebenfalls eingehalten werden können.

Der Begriff "Polyolkomponente" umfaßt im Rahmen des vorliegenden Textes ein einzelnes Polyol oder ein Gemisch von zwei oder mehr Polyolen, die zur Herstellung von Polyurethanen herangezogen werden können. Unter einem Polyol wird ein polyfunktioneller Alkohol verstanden, d.h. eine Verbindung mit mehr als einer OH-Gruppe im Molekül.

Als Polyolkomponente zur Herstellung der Komponente A kann eine Vielzahl von Polyolen eingesetzt werden. Beispielsweise sind dies aliphatische Alkohole mit 2 bis 4 OH-Gruppen pro Molekül. Die OH-Gruppen können sowohl primär als auch sekundär sein. Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren, wie sie sich für den Fachmann aus einer schrittweisen Verlängerung der Kohlenwasserstoffkette um jeweils eine CH₂-Gruppe oder unter Einführung von Verzweigungen in die Kohlenstoffkette ergeben. Ebenfalls geeignet sind höherfunktionelle Alkohole wie beispielsweise Glyzerin, Trimethylolpropan, Pentaerythrit sowie oligomere Ether der genannten Substanzen mit sich selbst oder im Gemisch aus zwei oder mehr der genannten Ether untereinander.

Weiterhin können als Polyolkomponente zur Herstellung der Komponente A die Umsetzungsprodukte niedermolekularer polyfunktioneller Alkohole mit Alkylenoxiden, sogenannte Polyether, eingesetzt werden. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen oder Hexandiolen mit Ethylenoxid, Propylenoxid oder Butylenoxid, oder Gemischen aus zwei oder mehr davon. Ferner sind auch die Umsetzungsprodukte polyfunktioneller Alkohole, wie Glyzerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Besonders geeignet sind Polyetherpolyole mit einem Molekulargewicht von etwa 100 bis etwa 10.000, vorzugsweise von etwa 200 bis etwa 5.000. Ganz besonders bevorzugt ist im Rahmen der vorliegenden Erfindung Polypropylenglykol mit einem Molekulargewicht von etwa 300 bis etwa 2.500. Ebenfalls als Polyolkomponente zur Herstellung der Komponente A geeignet sind Polyetherpolyole, wie sie beispielsweise aus der Polymerisation von Tetrahydrofuran entstehen.

Die Polyether werden in dem Fachmann bekannter Weise durch Umsetzung der Startverbindung mit einem reaktiven Wasserstoffatom mit Alkylenoxiden, beispielsweise Ethylenoxid, Propylenoxid, Butylenoxid, Styroloxid, Tetrahydrofuran oder Epichlorhydrin oder Gemischen aus zwei oder mehr davon, umgesetzt. Geeignete Startverbindungen sind beispielsweise Wasser, Ethylenglykol, Propylenglykol-1,2 oder -1,3, Butylenglykol-1,4 oder -1,3 Hexandiol-1,6, Octandiol-1,8, Neopentylglykol, 1,4-Hydroxymethylcyclohexan, 2-Methyl-1,3-propandiol, Glyzerin, Trimethylolpropan, Hexantriol-1,2,6, Butantriol-1,2,4 Trimethylolethan, Pentaerythrit, Mannitol, Sorbitol, Methylglykoside, Zucker, Phenol, Isononylphenol, Resorcin, Hydrochinon, 1,2,2- oder 1,1,2-Tris-(hydroxyphenyl)-ethan, Ammoniak, Methylamin, Ethylendiamin, Tetra- oder Hexamethylenamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen, oder Gemische aus zwei oder mehr davon.

Ebenfalls zum Einsatz als Polyolkomponente geeignet sind Polyether, die durch Vinylpolymere modifiziert wurden. Derartige Produkte sind beispielsweise erhältlich, indem Styrol- oder Acrylnitril, oder deren Gemisch, in der Gegenwart von Polyethem polymerisiert werden.

Ebenfalls als Polyolkomponente für die Herstellung von Komponente A geeignet, sind Polyesterpolyole mit einem Molekulargewicht von etwa 200 bis etwa 10.000. So können beispielsweise Polyesterpolyole verwendet werden, die durch Umsetzung von niedermolekularen Alkoholen, insbesondere von Ethylenglykol, Diethylenglykol, Neopentylglykol, Hexandiol, Butandiol, Propylenglykol, Glyzerin oder Trimethylolpropan mit Caprolacton entstehen. Ebenfalls als polyfunktionelle Alkohole zur Herstellung von Polyesterpolyolen geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuß an Dicarbonsäuren und/oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Im Rahmen der Erfindung besonders geeignet sind Polyesterpolyole aus mindestens einer der genannten Dicarbonsäuren und Glyzerin, welche einen Restgehalt an OH-Gruppen aufweisen. Besonders geeignete Alkohole sind Hexandiol, Ethylenglykol, Diethylenglykol oder Neopentylglykol oder Gemische aus zwei oder mehr davon. Besonders geeignete Säuren sind Isophthalsäure oder Adipinsäure oder deren Gemisch.

Im Rahmen der vorliegenden Erfindung besonders bevorzugt als Polyolkomponente zur Herstellung der Komponente A eingesetzte Polyole sind beispielsweise Dipropylenglykol und/oder Polypropylenglykol mit einem Molekulargewicht von etwa 400 bis etwa 2500, sowie Polyesterpolyole, bevorzugt Polyesterpolyole erhältlich durch Polykondensation von Hexandiol, Ethylenglykol, Diethylenglykol, Dipropylenglykol oder Neopentylglykol oder Gemischen aus zwei oder mehr davon und Isophthalsäure oder Adipinsäure, oder deren Gemische.

Polyesterpolyole mit hohem Molekulargewicht umfassen beispielsweise die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit vorzugsweise 1 bis 3 C-Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein.

Die Polyester können gegebenenfalls einen geringen Anteil an Carboxylendgruppen aufweisen. Aus Lactonen, beispielsweise ε-Caprolacton oder Hydroxycarbonsäuren, beispielsweise ω-Hydroxycapronsäure, erhältliche Polyester, können ebenfalls eingesetzt werden.

Ebenfalls als Polyolkomponente geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyclischer Acetale erhalten werden.

Weiterhin als Polyole zur Herstellung der Komponenten A geeignet sind Polycarbonate. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Ebenfalls als Polyolkomponente zur Herstellung der Komponenten A geeignet, sind OH-Gruppen tragende Polyacrylate. Diese Polyacrylate sind beispielsweise erhältlich durch die Polymerisation von ethylenisch ungesättigten Monomeren, die eine OH-Gruppe tragen. Solche Monomeren sind beispielsweise durch die Veresterung von ethylenisch ungesättigten Carbonsäuren und difunktionellen Alkoholen, wobei der Alkohol in der Regel in einem leichten Überschuß vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Die zur Herstellung der Komponente Á geeigneten Polyole können eine OH-Zahl von etwa 90 bis etwa 300, beispielsweise etwa 100 bis etwa 260 oder etwa 130 bis etwa 250 aufweisen.

Zur Herstellung der gesamten Komponente A wird die entsprechende Polyolkomponente jeweils mit einem mindestens difunktionellen Isocyanat umgesetzt. Als mindestens difunktionelles Isocyanat kommt sowohl zur Herstellung der Komponente A grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen, bevorzugt.

Nachfolgend werden mindestens difunktionelle Isocyanate beschrieben, die als das mindestens difunktionelle Isocyanat zur Herstellung der Komponenten A geeignet sind.

Beispielsweise sind dies: Ethylendiisocyanat, 1,4-Tetramethylendiisocyanat, 1,6-Hexamethylendiisocyanat (HDI), Cyclobutan-1,3-diisocyanat, Cyclohexan-1,3- und-1,4-diisocyanat sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Tetramethylxylylendiisocyanat (TMXDI), 1,3- und 1,4-Phenylendiisocyanat, 2,4- oder 2,6-Toluylendiisocyanat (TDI), Diphenylmethan-2,4'-diisocyanat, Diphenylmethan-2,2'-di-isocyanat oder Diphenylmethan-4,4'diisocyanat (Isocyanate der MDI-Reihe) oder Gemische aus zwei oder mehr der genannten Diisocyanate.

Ebenso im Sinne der vorliegenden Erfindung als Isocyanate zur Herstellung der Komponente A geeignet sind drei- oder höherwertige Isocyanate, wie sie beispielsweise durch Oligomerisierung von Diisocyanaten erhältlich sind. Beispiele für solche drei- und höherwertigen Polyisocyanate sind die Triisocyanurate von HDI oder IPDI oder deren Gemische oder deren gemischte Triisocyanurate.

In einer bevorzugt verwendeten Ausführungsform der Erfindung werden zur Herstellung der Komponente A Diisocyanate eingesetzt, die zwei Isocyanatgruppen mit unterschiedlicher Reaktivität aufweisen. Beispiele für solche Diisocyanate sind 2,4- und 2,6-Toluylendiisocyanat (TDI) und Isophorondiisocyanat (IPDI). Bei solchen nicht symmetrischen Diisocyanaten reagiert in der Regel eine Isocyanatgruppe deutlich schneller mit gegenüber Isocyanaten reaktiven Gruppen, beispielsweise OH-Gruppen, während die verbleibende Isocyanatgruppe vergleichsweise reaktionsträge ist. In einer bevorzugten Ausführungsform wird daher zur Herstellung der Komponente A ein monocyclisches, nicht- symmetrisches Diisocyanat eingesetzt, das über zwei Isocyanatgruppen der beschriebenen, unterschiedlichen Reaktivität verfügt.

Besonders bevorzugt ist zur Herstellung der Komponente A der Einsatz von 2,4-oder 2,6-Toluylendiisocyanat (TDI) oder einem Gemisch der beiden Isomeren, insbesondere jedoch der Einsatz von reinem 2,4-TDI.

Die Herstellung der Komponente B erfolgt unter Verwendung eines mindestens difunktionellen Isocyanats, das gewährleistet, daß zumindest der überwiegende Anteil der nach Abschluß der Umsetzung mit der Polyolkomponente verbleibenden Isocyanatgruppen der Komponente B reaktiver ist als der überwiegende Anteil der in Komponente A vorliegenden Isocyanatgruppen. Vorzugsweise werden zur Herstellung der Komponente B difunktionelle Isocyanate eingesetzt, deren Isocyanatgruppen eine weitgehend identische Reaktivität aufweisen. Insbesondere sind dies die symmetrischen Isocyanate, wobei die symmetrischen, aromatischen difunktionellen Isocyanate bevorzugt sind. Ganz besonders bevorzugt zur Herstellung der Komponente B sind die bicyclischen, aromatischen, symmetrischen Diisocyanate der Diphenylmethanreihe, insbesondere MDI.

Eine Polyurethanzusammensetzung mit den erfindungsgemäßen Vorteilen kann prinzipiell auf beliebige Weise hergestellt werden. Als besonders vorteilhaft haben sich jedoch zwei Verfahren erwiesen, die nachfolgend beschrieben werden.

Es ist beispielsweise möglich, das Polyurethanbindemittel zur Verwendung als Haftklebstoff direkt durch die Herstellung der Komponente A, mit einer nachträglichen Zugabe der Komponente A1 zu erzeugen.

Es ist jedoch ebenfalls möglich, die als Komponente A2 gewünschte Verbindung schon bei der Herstellung der Komponente A einzusetzen und in einem solchen Überschuß zuzugeben, daß der gewünschte Endgehalt an Komponente A2 erreicht wird.

Komponente A läßt sich also beispielsweise in zwei Stufen herstellen, wobei
c) in einer ersten Stufe aus einem mindestens difunktionellen Isocyanat und mindestens einer Polyolkomponente ein erstes Reaktionsprodukt hergestellt wird
und
d) in einer zweiten Stufe ein weiteres mindestens difunktionelles Isocyanat, oder ein weiteres mindestens difunktionelles Isocyanat und eine weitere Polyolkomponente, in Gegenwart des ersten Reaktionsproduktes umgesetzt wird,
wobei der überwiegende Anteil der nach Abschluß der ersten Stufe vorliegenden Isocyanatgruppen eine geringere Reaktivität gegenüber mit Isocyanaten reaktiven Gruppen, insbesondere gegenüber OH-Gruppen, aufweist als die Isocyanatgruppen des in der zweiten Stufe zugesetzten mindestens difunktionellen Isocyanats. In einer bevorzugten Ausführungsform der Erfindung beträgt in der zweiten Stufe das Verhältnis OH : NCO etwa 0,2 bis etwa 0,8.

Als eine weitere Polyolkomponente können prinzipiell alle schon im Rahmen dieses Textes genannten Polyolkomponenten eingesetzt werden.

Es ist vorteilhaft, wenn in der ersten Stufe des erfindungsgemäßen Verfahrens zur Herstellung der erfindungsgemäß verwendbaren Polyurethanzusammensetzung das Verhältnis OH : NCO weniger als 1 beträgt. Das Verhältnis von OH-Gruppen zu Isocyanatgruppen beträgt in einer bevorzugten Ausführungsform in der ersten Stufe etwa 0,4 bis etwa 0,7, insbesondere mehr als 0,5 bis etwa 0,7.

Die Umsetzung einer Polyolkomponente mit dem mindestens difunktionellen Isocyanat in einer ersten Stufe kann in jeder dem Fachmann bekannten Weise nach den allgemeinen Regeln der Polyurethanherstellung erfolgen. Die Umsetzung kann beispielsweise in Gegenwart von Lösemitteln erfolgen. Als Lösemittel sind grundsätzlich alle üblicherweise in der Polyurethanchemie benutzten Lösemittel verwendbar, insbesondere Ester, Ketone, halogenierte Kohlenwasserstoffe, Alkane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutylketon, Dioxan, Ethylacetat, Ethylenglykolmonobutyletheracetat, Ethylenglykolmonoethylacetat, 2-Ethylhexylacetat, Glykoldiacetat, Heptan, Hexan, Isobutylacetat, Isooctan, Isopropylacetat, Methylethylketon, Tetrahydrofuran oder Tetrachlorethylen oder Mischungen aus zwei oder mehr der genannten Lösemittel.

Wenn die Reaktionskomponenten selbst flüssig sind oder wenigstens eine oder mehrere der Reaktionskomponenten eine Lösung oder Dispersion weiterer, nicht ausreichend flüssiger Reaktionskomponenten bilden, so kann auf den Einsatz von Lösemitteln ganz verzichtet werden. Eine solche lösemittelfreie Reaktion ist im Rahmen der vorliegenden Erfindung bevorzugt.

Zur Durchführung der ersten Stufe des erfindungsgemäßen Verfahrens zur Herstellung der erfindungsgemäß verwendbaren Polyurethanzusammensetzung wird das Polyol, gegebenenfalls zusammen mit einem geeigneten Lösemittel, in einem geeigneten Gefäß vorgelegt und gemischt. Anschließend erfolgt unter Fortführung des Mischens die Zugabe des mindestens difunktionellen Isocyanats. Zur Beschleunigung der Reaktion wird üblicherweise die Temperatur erhöht. In der Regel wird auf etwa 40 bis etwa 80°C temperiert. Die einsetzende, exotherme Reaktion sorgt anschließend für ein Ansteigen der Temperatur. Die Temperatur des Ansatzes wird bei etwa 70 bis etwa 110°C beispielsweise bei etwa 85 bis 95°C oder insbesondere bei etwa 75 bis etwa 85°C gehalten, gegebenenfalls erfolgt die Einstellung der Temperatur durch geeignete äußere Maßnahmen, beispielsweise Heizen oder Kühlen.

Gegebenenfalls können zur Beschleunigung der Reaktion in der Polyurethanchemie übliche Katalysatoren zum Reaktionsgemisch zugesetzt werden. Bevorzugt ist die Zugabe von Dibutylzinndilaurat oder Diazabicyclooctan (DABCO). Wenn ein Katalysatoreinsatz gewünscht ist, wird der Katalysator in der Regel in eine Menge von etwa 0,005 Gew.-% oder etwa 0,01 Gew.-% bis etwa 0,2 Gew.-%, bezogen auf den gesamten Ansatz, dem Reaktionsgemisch zugegeben.
Die Reaktionsdauer für die erste Stufe hängt von der eingesetzten Polyolkomponente, vom eingesetzten mindestens difunktionellen Isocyanat, von der Reaktionstemperatur sowie vom gegebenenfalls vorhandenen Katalysator ab. Üblicherweise beträgt die Gesamtreaktionsdauer etwa 30 Minuten bis etwa 20 Stunden.

Vorzugsweise wird als das mindestens difunktionelle Isocyanat in der ersten Stufe Isophorondiisocyanat (IPDI), Tetramethylxylylendiisocyanat (TMXDI), hydriertes Diphenylmethandiisocyanat (MDI_{H12}) oder Toluylendiisocyanat (TDI) oder ein Gemisch aus zwei oder mehr davon eingesetzt.

Zur Durchführung der zweiten Stufe des erfindungsgemäßen Verfahrens zur Herstellung der erfindungsgemäß verwendbaren Polyurethanzusammensetzung wird im Gemisch mit der in der ersten Stufe erhaltenen Komponente A mindestens ein weiteres mindestens difunktionelles Isocyanat, gegebenenfalls mit einer weiteren Polyolkomponente oder einem Gemisch aus zwei oder mehr weiteren Polyolkomponenten umgesetzt. Als Bestandteil der weiteren Polyolkomponente oder des Gemischs aus zwei oder mehr weiteren Polyolkomponenten kann dabei jedes Polyol aus der Gruppe der im Laufe dieses Textes oben stehend aufgezählten Polyole oder ein Gemisch aus zwei oder mehr davon, eingesetzt werden. Vorzugsweise wird jedoch im Rahmen der zweiten Stufe des erfindungsgemäßen Verfahrens als Polyolkomponente ein Polypropylenglykol mit einem Molekulargewicht von etwa 400 bis etwa 2500, oder ein Polyesterpolyol mit mindestens einem hohen, insbesondere einem überwiegenden Anteil an aliphatischen Dicarbonsäuren, oder ein Gemisch dieser Polyole eingesetzt.

Als mindestens difunktionelles Isocyanat wird in der zweiten Stufe des erfindungsgemäßen Verfahrens zur Herstellung der erfindungsgemäß verwendbaren Polyurethanzusammensetzung mindestens ein Polyisocyanat eingesetzt, dessen Isocyanatgruppen eine höhere Reaktivität aufweisen als die Mehrzahl der sich im Präpolymeren befindlichen Isocyanatgruppen. Das heißt, es können im Präpolymeren durchaus noch reaktive Isocyanatgruppen vorliegen, die vom ursprünglich zur Herstellung der Komponente A eingesetzten mindestens difunktionetten Isocyanat stammen, erfindungswesentlich ist in diesem Zusammenhang lediglich, daß der überwiegende Anteil der in der Komponente A befindlichen lsocyanatgruppen eine geringere Reaktivität aufweist als die Isocyanatgruppen des weiteren mindestens difunktionellen Isocyanats A1, das gegebenenfalls in der zweiten Stufe des erfindungsgemäßen Verfahrens zugegeben wird.

Als das weitere mindestens difunktionelle Isocyanat wird vorzugsweise ein bicyclisches, aromatisches, symmetrisches Diisocyanat eingesetzt. Zu den bicyclischen Isocyanaten gehören beispielsweise die Diisocyanate der Diphenylmethan-Reihe, insbesondere das 2,2-Diphenylmethandiisocyanat, 2,4'-Diphenylmethandiisocyanat und 4,4'-Diphenylmethandiisocyanat, Unter den genannten Diisocyanaten ist der Einsatz von Diphenylmethandiisocyanat, insbesondere 4,4'-Diphenylmethandiisocyanat, als das weitere mindestens difunktionelle Isocyanat im Rahmen der zweiten Stufe des erfindungsgemäßen Verfahrens zur Herstellung der erfindungsgemäß verwendbaren Polyurethanzusammensetzung besonders bevorzugt.

Das weitere mindestens difunktionelle Isocyanat wird in der zweiten Stufe in einer Menge von etwa 0,1 bis etwa 5 Gew.-%, vorzugsweise etwa 1 bis etwa 3 Gew.-%, bezogen auf die Gesamtmenge der Komponente A, eingesetzt.

In einer bevorzugten Ausführungsform der vorliegenden Erfindung wird die Komponente A1 in einer solchen Menge zugegeben, daß die gesamte Komponente A einen Gehalt an Isocyanatgruppen von etwa 2 bis etwa 8. Gew.-%, beispielsweise etwa 3,5 bis etwa 6,5 Gew.-%, aufweist.

Die erfindungsgemäß zu verwendende Komponente A läßt sich jedoch ebenso durch Mischen einzelner Komponenten C, D und E herstellen, wobei
e) als Komponente C ein Isocyanatgruppen tragendes Polyurethan-Präpolymeres, erhältlich durch Umsetzung einer Polyolkomponente mit einem mindestens difunktionellen Isocyanat,
f) als Komponente D ein weiteres Isocyanatgruppen tragendes Polyurethan-Präpolymeres, erhältlich durch Umsetzung einer Polyolkomponente mit einem weiteren mindestens difunktionellen Isocyanat, dessen Isocyanatgruppen eine höhere Reaktivität gegenüber mit Isocyanaten reaktiven Gruppen aufweisen als die Isocyanatgruppen der Komponente C
und
g) als Komponente E ein weiteres mindestens difunktionelles Isocyanat, dessen Molekulargewicht geringer ist als das der Komponenten C und D, und dessen Isocyanatgruppen eine höhere Reaktivität gegenüber mit Isocyanaten reaktiven Gruppen aufweisen als die Isocyanatgruppen der Komponente C;
eingesetzt wird, wobei die Menge der Komponente E so bemessen wird, daß nach Abschluß des Mischungsvorgangs und nach Beendigung aller zwischen den Komponenten C, D und E gegebenenfalls ablaufenden Reaktionen etwa 2 bis etwa 8 Gew.-%, insbesondere etwa 3,5 bis etwa 6,5 Gew.-% an Komponente E im Polyurethanbindemittel vorliegen.

Unter "allen zwischen den Komponenten C, D und E gegebenenfalls ablaufenden Reaktionen" werden im Rahmen der vorliegenden Erfindung Reaktionen von Isocyanatgruppen mit funktionellen Gruppen verstanden, die gegenüber Isocyanaten reaktive Wasserstoffatome aufweisen. Insbesondere, wenn beispielsweise die Komponenten C oder D, oder C und D, noch freie OH-Gruppen aufweisen, führt die Zugabe der Komponente E in der Regel zu einer Reaktion der Isocyanatgruppen der Komponente E mit den freien OH-Gruppen. Daraus resultiert eine Verminderung des Gehalts an Komponente E. Demnach muß, wenn Reaktionen zu erwarten sind, die zu einer Verminderung des Anteils an Komponente E führen können, die Komponente E in einer solchen Menge zugegeben werden, daß nach Abschluß aller dieser Reaktionen die geforderte Menge an Komponente E im Polyurethanbindemittel vorliegt.

Als Polyolkomponente zur Herstellung der Komponenten C und D im Rahmen der erfindungsgemäßen Verfahrens zur Herstellung der erfindungsgemäß verwendbaren Polyurethanzusammensetzung können alle oben beschriebenen Polyole und Gemische aus zwei oder mehr der genannten Polyole, eingesetzt werden. Insbesondere die Polyolkomponenten, die zur Herstellung der Komponente A im Rahmen dieses Textes als besonders geeignet genannt wurden, werden vorzugsweise auch im Rahmen der erfindungsgemäßen Verfahrens eingesetzt.

Für das als Komponente E einzusetzende, mindestens difunktionelles Isocyanat, dessen Molekulargewicht geringer ist als das der Komponenten C und D, und dessen Isocyanatgruppen eine höhere Reaktivität aufweisen als die Isocyanatgruppen der Komponente C, gelten die Ausführungen zu Komponente A2 analog.

In einer bevorzugten Ausführungsform der Erfindung kann im Anschluß an die bereits beschriebenen beiden Stufen noch ein weiteres, mindestens trifunktionelles Isocyanat als Komponente F zugegeben werden. Als mindestens trifunktionelle Isocyanate geeignet sind die bereits weiter oben beschriebenen Polyisocyanate mit mindestens drei NCO-Gruppen bzw. die Tri- und Polymerisierungsprodukte der oben angegebenen difunktionellen Isocyanate.

Die erfindungsgemäß zu verwendende Komponente A und die daraus erfindungsgemäß hergestellten Polyurethanzusammensetzungen zur Verwendung von Haftklebstoff zeichnen sich insbesondere dadurch aus, daß sie einen äußerst geringen Gehalt an leichtflüchtigen, Isocyanatgruppen tragenden Monomeren aufweisen, der weniger als 2 Gew.-%, oder weniger als 1 Gew.-%, weniger als 0,5 Gew.-% und insbesondere weniger als etwa 0,1 Gew.-% beträgt. Es ist dabei besonders hervorzuheben, daß das erfindungsgemäße Verfahren zur Herstellung der erfindungsgemäß verwendbaren Polyurethanzusammensetzung ohne separate Verfahrensschritte zur Entfernung leichtflüchtiger Diisocyanatkomponenten auskommt.

Zur Herstellung der erfindungsgemäß zu verwendenden Polyurethanzusammensetzung wird neben der Komponente A weiterhin als Komponente B ein Härter eingesetzt.

Als Komponente B wird vorzugsweise mindestens eine Verbindung mit mindestens zwei gegenüber den Isocyanatgruppen der Komponente A reaktionsfähigen funktionellen Gruppen eingesetzt. Die in Komponente B zum Einsatz kommenden Verbindungen weisen in einer bevorzugten Ausführungsform der Erfindung ein Molekulargewicht von bis zu etwa 2.500 auf. Als gegenüber den Isocyanatgruppen der Komponente F reaktionsfähige funktionellen Gruppen eignen sich insbesondere Aminogruppen, Mercaptogruppen oder OH-Gruppen, wobei Verbindungen, die in Komponente B einsetzbar sind, Aminogruppen, Mercaptogruppen oder OH-Gruppen jeweils ausschließlich, oder im Gemisch aufweisen können, solange die geforderte Funktionalität erfüllt ist.

Die OH-Zahl der als Komponente B eingesetzten Polyole beträgt etwa 90 bis etwa 350, beispielsweise etwa 100 bis etwa 300, beispielsweise etwa 130 bis etwa 250.

Die Funktionalität der in Komponente B einsetzbaren Verbindungen beträgt in der Regel mindestens etwa zwei. Gegebenenfalls kann Komponente B einen Anteil an höherfunktionellen Verbindungen aufweisen, beispielsweise mit einer Funktionalität von drei, vier oder mehr. Die gesamte (durchschnittliche) Funktionalität der Komponente G beträgt beispielsweise etwa zwei (z.B. wenn nur difunktionelle Verbindungen als Komponente B eingesetzt werden), oder mehr, beispielsweise etwa 2,1, 2,2, 2,5, 2,7, oder 3. In einer bevorzugt verwendeten Ausführungsform der Erfindung weist Komponente B eine Funktionalität von etwa 2,0 bis etwa 2,1 auf, beispielsweise etwa 2,01, 2,03, 2,05, 2,07 oder 2,09.

Vorzugsweise enthält Komponente B ein mindestens zwei OH-Gruppen tragendes Polyol. Zum Einsatz in Komponente B sind alle im Rahmen des vorliegenden Textes erwähnten Polyole geeignet, sofern sie das einschränkende Kriterium der Obergrenze des Molekulargewichts erfüllen.

In einer bevorzugt verwendeten Ausführungsform der vorliegenden Erfindung wird als Komponente B ein Gemisch aus zwei oder mehr Polyolen eingesetzt, wobei das Gemisch mindestens einen Polyester enthält. In einer weiteren bevorzugten Ausführungsform wird als Komponente B ein Gemisch eingesetzt, das mindestens einen Polyether enthält. I einer weiteren bevorzugt verwendeten Ausführungsform der Erfindung wird als Komponente B ein Gemisch eingesetzt, das mindestens einen Polyester, mindestens einen difunktionellen Polyether und mindestens einen trifunktionellen Polyether enthält.

In einer weiteren bevorzugt verwendeten Ausführungsform der Erfindung wird als Komponente B ein Gemisch aus 0 - 80 Gew.-% Polyester, 0 bis 10 Gew.-% trifunktionellem Polyether, 10 bis 80 Gew.-% difunktionellem Polyether mit einem Molekulargewicht

(M_{w}) von mindestens etwa 1000 und 10 bis 80 Gew.-% difunktionellem Polyether mit einem Molekulargewicht (M_{w}) von höchstens etwa 800 eingesetzt. Komponente B wird im Rahmen der vorliegenden Erfindung in einer Menge eingesetzt, daß das Verhältnis von Isocyanatgruppen der Komponente A zu mit Isocyanatgruppen der Komponente A reaktionsfähigen, funktionellen Gruppen in Komponente B größer als etwa 0,75 und kleiner als etwa 1,15. In einer weiteren Ausführungsform der Erfindung beträgt das Verhältnis mehr als etwa 1 bis etwa 1,15, insbesondere etwa 1,01 bis etwa 1,1.

Die erfindungsgemäß zu verwendende Polyurethanzusammensetzung weist in der Regel direkt nach dem Vermischen der Komponenten A und B eine Viskosität von etwa 1.000 bis etwa 5.000 mPas, insbesondere etwa 1.500 bis etwa 3.000 mPas (Brookfield RVT D, Spindel 27, 70 C) auf.

Gegebenenfalls kann die erfindungsgemäß zu verwendende Polyurethanzusammensetzung noch Zusatzstoffe enthalten. Die Zusatzstoffe können an der gesamten Zusammensetzung einen Anteil von bis zu etwa 10 Gew.-% aufweisen.

Zu den im Rahmen der vorliegenden Erfindung einsetzbaren Zusatzstoffen zählen beispielsweise Weichmacher, Stabilisatoren, Antioxidantien, Farbstoffe, Photostabilisatoren oder Füllstoffe.

Als Weichmacher werden beispielsweise Weichmacher auf Basis von Phthalsäure eingesetzt, insbesondere Dialkylphthalate, wobei als Weichmacher Phthalsäureester bevorzugt sind, die mit einem etwa 6 bis etwa 12 Kohlenstoffatomen aufweisenden, linearen Alkanol verestert wurden. Besonders bevorzugt ist hierbei das Dioctylphthalat.

Ebenfalls als Weichmacher geeignet sind Benzoatweichmacher, beispielsweise Sucrosebenzoat, Diethylenglykoldibenzoat und/oder Diethylenglykolbenzoat, bei dem etwa 50 bis etwa 95% aller Hydroxylgruppen verestert worden sind, PhosphatWeichmacher, beispielsweise t-Butylphenyldiphenylphosphat, Polyethylenglykole und deren Derivate, beispielsweise Diphenylether von Poly(ethylenglykol), flüssige Harzderivate, beispielsweise der Methylester von hydriertem Harz, pflanzliche und tierische Öle, beispielsweise Glycerinester von Fettsäuren und deren Polymerisationsprodukte.

Zu den im Rahmen der Erfindung als Zusatzstoffe einsetzbaren Stabilisatoren oder Antioxidantien, zählen gehinderte Phenole hohen Molekulargewichts (Mₙ), polyfunktionelle Phenole und schwefel- und phosphorhaltige Phenole. Im Rahmen der Erfindung als Zusatzstoffe einsetzbare Phenole sind beispielsweise 1,3,5-Trimethyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octa-decyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Di-tert-butylphenol; 6-(4-Hydroxyphenoxy)-2,4-bis(n-octylthio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tertbutyl-4-hydroxyphenyl)propionat].

Als Photostabilisatoren sind beispielsweise diejenigen geeignet, die unter dem Namen Thinuvin® (Hersteller: Ciba Geigy) im Handel erhältlich sind.

Weitere Zusatzstoffe können in die erfindungsgemäß zu verwendenden Klebstoffe mitaufgenommen werden um bestimmte Eigenschaften zu variieren. Darunter können beispielsweise Farbstoffe wie Titandioxid, Füllstoffe wie Talkum, Ton und dergleichen sein. Gegebenenfalls können in den erfindungsgemäß zu verwendenden Klebstoffen geringe Mengen an thermoplastischen Polymeren oder Copolymeren vorliegen, beispielsweise Ethylenvinylacetat (EVA), Ethylenacrylsäure, Ethylenmethacrylat und Ethylen-n-butylacrylatcopolymere, die dem Klebstoff gegebenenfalls zusätzliche Flexibilität, Zähigkeit und Stärke verleihen. Es ist ebenfalls möglich, und im Rahmen der vorliegenden Erfindung bevorzugt, bestimmte hydrophile Polymere zuzugeben, beispielsweise Polyvinylalkohol, Hydroxyethylcellulose, Hydroxypropylcellulose, Polyvinylmethylether, Polyethylenoxid, Polyvinylpyrrolidon, Polyethyloxazoline oder Stärke oder Celluloseester, insbesondere die Acetate mit einem Substitutionsgrad von weniger als 2,5, welche die Benetzbarkeit der Klebstoffe erhöhen.

Außerdem können die erfindungsgemäß zu verwendenden Klebstoffe Tackifierharze enthalten. Geeignete Tackifierharze sind beispielsweise Kohlenwasserstoffharze, insbesondere C5- oder C9-Harze oder mit C5-Harzen modifizierte C9-Harze. Weiterhin zum Einsatz als Tackifierharze geeignet sind Harze auf Basis reiner Kohlenwasserstoffmonomerer, beispielsweise Harze wie sie aus der Polymerisation von Mischungen aus Styrol, α-Methylstyrol und Vinyltoluol erhältlich sind. Die genannten Kohlenwasserstoffharze können teilhydriert oder vollhydriert sein.

Ebenfalls zum Einsatz als Tackifierharze geeignet sind Naturharze wie Balsamharz wie es beispielsweise aus Bäumen gewonnen wird, oder Tallharz, das bei der Papierherstellung anfällt. Die Naturharze können in der oben genannten Form als Tackifierharze eingesetzt werden, es ist jedoch ebenso möglich, die genannten Harze nach Veresterung mit entsprechenden polyfunktionellen Alkoholen als Pentaerythritester, Glycerinester, Diethylenglykolester, Triethylenglykolester oder Methylester einzusetzen.

Ebenso als Tackifierharze geeignet sind die Polyterpenharze. Terpene fallen bei der Trennung von Harzsäuren von deren natürlichen Lösemitteln an und lassen sich zu Polyterpenharzen polymerisieren. Ebenfalls zum Einsatz als Tackifierharze geeignet sind die durch Phenolmodifizierung aus Polyterpenharzen gewinnbaren Terpenphenolharze.

Gegenstand der vorliegenden Erfindung ist auch ein Verfahren zur Herstellung einer Polyurethanzusammensetzung zur Verwendung als Haftklebstoff gemäß einem der Ansprüche 1 bis 7, bei dem mindestens zwei Komponenten A und B miteinander zur Reaktion gebracht werden, wobei
g) als Komponente A mindestens ein Polyurethan Präpolymeres eingesetzt wird, das durch Umsetzung mindestens einer Polyolkomponente mit mindestens zwei mindestens difunktionellen unterschiedlichen Isocyanaten erhältlich ist und
h) als Komponente B ein mindestens difunktioneller Härter eingesetzt wird, der pro Molekül mindestens zwei gegenüber Isocyanatgruppen reaktionsfähige funktionelle Gruppe aufweist,
und das Verhältnis von Isocyanatgruppen zu gegenüber Isocyanatgruppen reaktionsfähigen fonktionellen Gruppen größer als etwa 0,75 und kleiner als etwa 1,15 ist.

Ein weiterer Gegenstand der Erfindung betrifft die Verwendung einer erfindungsgemäßen Polyurethanzusammensetzung als Haftklebstoff, insbesondere als Haftklebstoff in der Verpackungsindustrie zur laminierten Beschichtung von Substraten, z.B. Kartonagen, zur Beschichtung von Papier, beispielsweise zur Herstellung von Selbstklebeetiketten, zur Beschichtung von Folien und Verbundmaterialien, beispielsweise zur Herstellung wiederverschließbarer Verpackungen sowie als Kaschierklebstoff.

Ein weiterer Gegenstand der Erfindung betrifft wiederverschließbare Verpackungen, die unter Verwendung einer erfindungsgemäßen Polyurethanzusammensetzung zur Verwendung als Haftklebstoff hergestellt wurden.

Die Erfindung wird nachfolgend durch Beispiele erläutert, die jedoch keine beschränkende Wirkung ausüben.

### Beispiele

Liste der benutzten Abkürzungen:
- DPG =: Dipropylenglykol
- PPG1 =: Polypropylenglykol, OH-Zahl etwa 109
- PPG2 =: Polypropylenglykol, OH-Zahl etwa 250
- PPG3 =: mit TMP gestartetes Polypropylenglykol, OH-Zahl etwa 256

- TDI =: Toluylendiisocyanat (2,4-Isomer)
- MDI =: 4,4'-Diphenylmethandiisocyanat

- PE1 =: Polyester auf Basis
Isophthalsäure/Phthalsäure/Adipinsäure/Diethylenglykol/
Neopentylglykol/Dipropylenglykol im Gewichtsverhältnis von etwa 3:2:50:30:5:20, OH-Zahl etwa 130
- PE2 =: Polyester auf Basis Isophthalsäure/Phthalsäure/Adipinsäure/Diethylenglykol/Propylenglykol im Gewichtsverhältnis von etwa 30:10:20:30:10
- NCO =: Isocyanatgruppengehalt
- MV =: Mischungsverhältnis
- VH =: Verbundhaftung
- SNH =: Siegelnahthaftung
- LDPE =: Polyethylenfolie aus LDPE, Dicke: ca. 30µm, Fa. M&W
- PET_{12U} =: Polyethylenterephthalatfolie, Dicke: ca. 12µm, Fa. Mitsubishi
- PETP_{12U}=: gestreckte Polyethylenterephthalatfolie, bedruckt, Dicke: ca. 12µm, Fa. Mitsubishi
- PE_{KO88} =: LLDPE/LDPE-Blend, Dicke: ca. 70µm, Fa. Mildenberger und Willing

Für die Beispiele 1 bis 12 wurden die Komponenten A und B wie im Text angegeben hergestellt. Harz 1 dient Vergleichszwecken. Folgende Komponenten A kamen zum Einsatz:

**Tabelle 1:**

| Komponenten A | | | |
|---|---|---|---|
| | Massenanteile in % | | |
| Rohstoff | Harz 1 | Harz 2 | Harz 3 |
| | | | |
| PE1 | 15 | 31 | |
| PPG3 | | | 6 |
| PPG1 | 15 | 33 | 62 |
| PPG2 | 14 | 9,6 | 5,5 |
| TDI | ----- | 24 | 24 |
| | | | |
| MDI | 56 | 2,4 | 2,5 |
| NCO | 17% | 4,2% | 4,8% |

Folgende Komponenten B kamen zum Einsatz:

**Taelle 2:**

| Komponenten B | | | |
|---|---|---|---|
| | Gewichtsteile | | |
| Rohstoffe | Härter 1 | Härter 2 | Härter 3 |
| PE1 | 10 | 40 | 10 |
| PE2 | 30 | --- | 10 |
| PPG1 | --- | 40 | 30 |
| PPG2 | 5 | --- | 30 |
| PPG3 | --- | 10 | --- |
| DEG | --- | --- | 20 |

Die Komponenten A und B wurden in den unten angegebenen Verhältnissen vermischt und auf die entsprechend angegebenen Folien aufgetragen. Nach einer Aushärtzeit von etwa 14 Tagen wurden die Verbunde vermessen.

**Tabelle 3:**

| Meßergebnisse | | | | |
|---|---|---|---|---|
| Verbund Nr.: | Verbundaufbau | PU-Zusammensetzung | VH [N/15mm] | VH [N/15mm] nach 10x öffnen und Schließen |
| 1. | PET_{12µ} / PE_{KO88} | Harz 3, Härter 1 MV: 6:1 | 3,1 PET-Abriß | 0,2 Klebstoff auf PE |
| 2. | PET_{12µ} / PE_{KO88} | Harz 3, Härter 1 MV: 5:1 | 2,1 Klebstoff auf PE | 0,2 Klebstoff auf PE |
| 3. | PET_{12µ} / PE_{KO88} | Harz 2, Härter 2 MV: 6:1 | 3,3 PET-Abriß | 0,2 Klebstoff auf PE |
| 4. | PET_{12µ} / PE_{KO88} | Harz 2, Härter 2 MV: 5:1 | 3,3 PET-Abriß | 0,2 Klebstoff auf PE |
| 5. | PETP_{12µ} / LDPE | Harz 2, Härter 2 MV: 4:1 | 2,0 Klebstoff beidseitig | 1,0 Klebstoff beidseitig |
| 6. | PET_{12µ} / PE_{KO88} | Harz 3, Härter 1 MV: 6:1 | 2,2 Klebstoff auf PE | 0,2 Klebstoff auf PE |
| 7. | PETP_{12µ} / LDPE | Harz 3, Härter 1 MV: 5:1 | 2,2 Klebstoff auf PE | 0,2 Klebstoff auf PE |
| 8. | PETP_{12µ} / PE_{KO88} | Harz 3, Härter 1 MV: 5:1 | 2,2 Klebstoff auf PE | 0,2 Klebstoff auf PE |
| 9. | PET_{12µ} / LDPE | Harz 3, Härter 1 MV: 5:1 | 2,3 Klebstoff auf PE | 0,2 Klebstoff auf PE |
| 10. | PETP_{12µ} / PE_{KO88} | Harz 2, Härter 2 MV: 6:1 | 3,5 Klebstoff auf PE | 0,2 Klebstoff auf PE |
| 11. | PETP_{12µ} / LDPE | Harz 2, Härter 2 MV: 6:1 | 3,2 Klebstoff auf PE | 0,2 Klebstoff auf PE |
| 12. | PETP_{12µ} / LDPE | Harz 1, Härter 3 MV: 100:70 | 12 PET-Dehnung | ----- |

## Patentansprüche

1. Verwendung einer Polyurethanzusammensetzung, erhältlich durch Umsetzung zweier Komponenten A und B, wobei
a) als Komponente A mindestens ein Polyurethan Präpolymeres A1 eingesetzt wird, das durch Umsetzung mindestens einer Polyolkomponente mit mindestens zwei mindestens difunktionellen unterschiedlichen Isocyanaten erhältlich ist und
b) als Komponente B ein mindestens difunktioneller Härter eingesetzt wird, der pro Molekül mindestens zwei gegenüber Isocyanatgruppen reaktionsfähige funktionelle Gruppe aufweist,
wobei das Verhältnis von Isocyanatgruppen zu gegenüber Isocyanatgruppen reaktionsfähigen funktionellen Gruppen größer als 0,75 und kleiner als 1,15 ist, als Haftklebstoff.

2. Verwendung einer Polyurethanzusammensetzung nach Anspruch 1, **dadurch gekennzeichnet, daß** das Verhältnis von Isocyanatgruppen zu gegenüber Isocyanatgruppen reaktionsfähigen funktionellen Gruppen mehr als 1 bis 1,15 beträgt.

3. Verwendung einer Polyurethanzusammensetzung nach Anspruch 1 oder 2, **dadurch gekennzeichnet, daß** als mindestens zwei difunktionelle unterschiedliche Isocyanate TDI und MDI eingesetzt werden.

4. Verwendung einer Polyurethanzusammensetzung nach einem der Ansprüche 1 bis 3, **dadurch gekennzeichnet, daß** die Polyolkomponente eine Funktionalität von 2,0 bis 2,3 aufweist.

5. Verwendung einer Polyurethanzusammensetzung nach einem der Ansprüche 1 bis 3, **dadurch gekennzeichnet, daß** die Polyolkomponente mindestens einen Polyester und mindestens einen Polyether enthält.

6. Verwendung einer Polyurethanzusammensetzung nach einem der Ansprüche 1 bis 3, **dadurch gekennzeichnet, daß** die Polyolkomponente mindestens einen Polyester, mindestens einen difunktionellen Polyether und mindestens einen trifunktionellen Polyether enthält.

7. Verwendung einer Polyurethanzusammensetzung nach einem der Ansprüche 1 bis 3, **dadurch gekennzeichnet, daß** Komponente A vor dem Vermischen der Komponenten A und B einen Gehalt an NCO-Gruppen von 2 bis 8 Gew.-% aufweist.

8. Wiederverschließbare Verpackung, hergestellt unter Verwendung einer Polyurethanzusammensetzung zur Verwendung als Haftklebstoff nach einem der Ansprüche 1 bis 7.

## Claims

1. The use of a polyurethane composition obtainable by reacting two components A and B,
a) at least one polyurethane prepolymer A1 obtainable by reacting at least one polyol component with at least two at least difunctional different isocyanates being used as component A and
b) an at least difunctional hardener containing at least two isocyanate-reactive functional groups per molecule being used as component B,
and the ratio of isocyanate groups to isocyanate-reactive functional groups being greater than 0.75:1 and smaller than 1.15:1, as a pressure-sensitive adhesive.

2. The use of a polyurethane composition as claimed in claim 1, **characterized in that** the ratio of isocyanate groups to isocyanate-reactive functional groups is more than 1 to 1.15:1.

3. The use of a polyurethane composition as claimed in claim 1 or 2, **characterized in that** TDI and MDI are used as the at least two difunctional different isocyanates.

4. The use of a polyurethane composition as claimed in any of claims 1 to 3, **characterized in that** the polyol component has a functionality of 2.0 to 2.3.

5. The use of a polyurethane composition as claimed in any of claims 1 to 3, **characterized in that** the polyol component contains at least one polyester and at least one polyether.

6. The use of a polyurethane composition as claimed in any of claims 1 to 3, **characterized in that** the polyol component contains at least one polyester, at least one difunctional polyether and at least one trifunctional polyether.

7. The use of a polyurethane composition as claimed in any of claims 1 to 3, **characterized in that** component A has an NCO group content of 2 to 8% by weight before components A and B are mixed.

8. A resealable pack produced using a polyurethane composition for use as a pressure-sensitive adhesive as claimed in any of claims 1 to 7.

## Revendications

1. Utilisation d'une composition à base de polyuréthane, que l'on peut obtenir par réaction de deux composants A et B, dans laquelle
a) en tant que composant A, on utilise au moins un prépolymère de polyuréthane A1, qui peut être obtenu par réaction d'au moins un composant polyol avec au moins deux isocyanates différents au moins difonctionnels et
b) en tant que composant B, on utilise un durcisseur au moins difonctionnel, qui présente, par molécule, au moins deux groupes fonctionnels capables de réagir avec des groupes isocyanate,
le rapport des groupes isocyanate aux groupes fonctionnels capables de réagir avec des groupes isocyanate étant supérieur à 0,75 et inférieur à 1,15,
en tant qu'adhésif sensible à la pression.

2. Utilisation d'une composition à base de polyuréthane selon la revendication 1, **caractérisée en ce que** le rapport des groupes isocyanate aux groupes fonctionnels capables de réagir avec des groupes isocyanate est supérieur à 1 à 1,15.

3. Utilisation d'une composition à base de polyuréthane selon la revendication 1 ou 2, **caractérisée en ce que**, comme au moins deux isocyanates difonctionnels différents, on utilise le TDI et le MDI.

4. Utilisation d'une composition à base de polyuréthane selon l'une quelconque des revendications 1 à 3, **caractérisée en ce que** le composant polyol présente une fonctionnalité de 2,0 à 2,3.

5. Utilisation d'une composition à base de polyuréthane selon l'une quelconque des revendications 1 à 3, **caractérisée en ce que** le composant polyol contient au moins un polyester et au moins un polyéther.

6. Utilisation d'une composition à base de polyuréthane selon l'une quelconque des revendications 1 à 3, **caractérisée en ce que** le composant polyol contient au moins un polyester, au moins un polyéther difonctionnel et au moins un polyéther trifonctionnel.

7. Utilisation d'une composition à base de polyuréthane selon l'une quelconque des revendications 1 à 3, **caractérisée en ce que** le composant A présente, avant le mélange des composants A et B, une teneur en groupes NCO de 2 à 8 % en poids.

8. Conditionnement refermable, préparé en utilisant une composition à base de polyuréthane en tant qu'adhésif sensible à la pression selon l'une quelconque des revendications 1 à 7.
